# EUROPEAN PATENT SPECIFICATION

(11) **EP 2 229 530 B1**
(45) Date of publication and mention of the grant of the patent: **08.06.2016**
(21) Application number: 08856521.3
(22) Date of filing: 01.12.2008
(51) Int. Cl.: F03D 7/02

(54) **COMPENSATION SYSTEM FOR A ROTOR**
AUSGLEICHSSYSTEM FÜR EINEN ROTOR
SYSTÈME DE COMPENSATION POUR ROTOR

(30) Priority: 03.12.2007 GB 0723620
(43) Date of publication of application: 22.09.2010
(73) Proprietor: SgurrControl Limited, Aberdeen AB12 3AX (GB)
(72) Inventor: LEITHEAD, William, E, Bridge of Weir PA11 3JD (GB)
(74) Representative: Docherty, Andrew John
(86) International application number: PCT/GB2008/003988
(87) International publication number: WO 2009/071882

(56) References cited:
- EP-A- 0 995 904
- EP-A- 1 230 479
- EP-A- 1 666 723
- EP-A- 1 788 237
- WO-A-2006/010190

## Description

### Field of Invention

This invention relates to the field of power generating wind turbines comprising a rotor having one or more blades, each with an actuator for adjusting the angle of pitch about its longitudinal axis.

In particular, this invention relates to a compensation system for independently modifying a rotor blade pitch angle signal output by a centralised controller of a rotor blade control system.

This invention also finds application for rotors in the field of fluid, particularly water, turbines, such as marine turbines.

### Background to the Invention

Wind turbines are now a common means of generating electricity in many countries with tens of GigaWatts of installed capacity in Europe and the USA. Since the late 1990s, the power rating and size of wind turbines has increased rapidly to about 5MW and 120m rotor diameter today. Both the power generated by the wind turbine and the rotational speed of the rotor must be regulated to achieve viable operation of the wind turbine to avoid over-engineering, since the power available from the wind increases with the cube of wind speed, and to keep the rotational speed of the rotor within a safe operating range. In higher wind speeds, the regulation of the wind turbine is partly or wholly realised by adjusting the angle of pitch of the blades as the wind speed varies to keep the generated power or the rotational speed of the rotor constant, or for some other closely related purpose.

The blades are typically adjusted collectively; that is, the same pitch adjustment is made to all the blades. In so doing, account is taken only of the average wind speed over the whole rotor. The adjustment to the angle of pitch of the blades is determined by a centralised controller of a wind turbine rotor blade control system in response to measurements of the generated power or the rotational speed of the rotor constant or some other closely related measurements. The actuators adjust the pitch angle of the blades by the amount determined by the centralised controller.

When regulating the wind turbine in the above manner, other than gravity loads or blade misalignment loads, the loads on each blade would be the same provided a wind-field, with which the rotor interacts, is uniform; that is, symmetric about an axis through a hub of the rotor and perpendicular to the rotor. However, a real wind-field is not uniform. Instead, wind speed increases with height, is reduced in front of a tower supporting the rotor and varies turbulently over a disc swept by the blades. Consequently, particularly for large wind turbines, the loadings on each blade and the average wind speed representative thereof are different. This asymmetric loading on the rotor and thereby on the supporting structure varies continuously reducing the service life of the wind turbine.

To remove the asymmetric loads, the angle of pitch of each blade may be separately adjusted. In so doing, account is taken of the average wind speed over the blade.

US 4,297,076 discloses a wind turbine in which only the tip portions of the blades are variable in pitch. Bending moments on each blade are measured and cyclic adjustments of the pitch angles of the tips, differing only in phase, are derived from the asymmetry of the bending moments. This cyclic pitch adjustment leads to a reduction in cyclic asymmetric loading on the rotor.

US 6,361,275 discloses a wind turbine including an adjusting device for adjusting the pitch of each rotor blade. Loads on each blade are measured using strain gauges and/or wind speeds for each blade are measured using blade-mounted anemometers. All measurements are communicated to a central control device that determines the individual adjustments to the pitch angles of the blades required to achieve reduced loads. The adjustments to the pitch angles are then enacted by actuators connected to respective blades. This individual blade pitch adjustment leads to a reduction in asymmetric loading on the rotor. Another pitch controller is known from EP 1 666 723.

WO 2005/010358 discloses a wind turbine including an adjusting device for adjusting the pitch of each blade similar to US 6,361,275. Radial displacements from the rest position of the main shaft are measured using proximity sensors. All measurements are communicated to a central control device that determines the magnitude and/or the orientation of the asymmetric load on the rotor and thereby the individual adjustments to the pitch angles of the blades required to achieve reduced loads. The adjustments to the pitch angles are then enacted by actuators connected to respective blades. This individual blade pitch adjustment leads to a reduction in asymmetric loading on the rotor.

WO 2007/104306 discloses a method for determining the individual adjustments to the pitch angles of the blades in the adjusting device disclosed in US 6,361,275. In US 6,361,275 the loads on each blade are measured, the adjustments required to achieve reduced loads determined and then enacted. The loads are collected, stored and a load distribution function determined. A plurality of periodic functions are determined from the distribution and then used to determine the adjustment of the pitch angles of the blades.

The above-mentioned prior art solutions to the problem of asymmetric wind turbine blade loading are limited or are difficult to tune and are wind turbine specific in design. In US 4,297,076 only cyclic asymmetric rotor loads are reduced. In US 6,361,275 cyclic and non-cyclic asymmetric rotor loads are reduced but a full dynamic analysis of the wind turbine is required which relies upon many attributes and physical parameters of the wind turbine and complex control devices.

WO 2005/010358 differs from US 6,361,275 only in the measurements made. In WO 2007/104306 only that part of the non-cyclic asymmetric rotor loads consisting of a finite set of sinusoids is reduced. The frequencies of the sinusoids are integer multiples of the nominal cyclic rotor frequency and the adjustments made to each blade are the same except for phase shifts. When the rotor has three blades, the phase shifts are 120 degrees and 240 degrees.

A common feature of the prior art is the communication of all load measurements to a central control device. Moment loads on the rotor blades are coordinate transformed into a coordinate system defined by tilt and yaw, the adjustment required to reduce the asymmetric loads on the rotor are determined in this transformed coordinate system and then inverse coordinate transformed to determine the adjustments of the pitch to each blade. For a three bladed wind turbine, the procedure is very similar to the Parks transform used to derive the d-q representation of an electrical machine dynamic model from its three-phase representation. In WO 2007/104306, the coordinate transform, T, and the inverse coordinate transform, T⁻¹, is clearly shown in Figure 7. In WO 2005/010358, the measurement of the radial displacements from the rest position of the main shaft obviates the need to coordinate transform loads into a coordinate system defined by tilt and yaw. Nevertheless, the adjustments of the pitch of each blade still require to be determined using the inverse coordinate transform or by some other means. Although their absence does not indicate otherwise, the use of either the coordinate transform or the inverse coordinate transform or the use of equivalent means is a definitive indication that an adjusting device for adjusting the pitch of each rotor blade is a central control device.

This invention has as its aim to provide an alternative solution to the problem of reducing asymmetric rotor loads, which is simpler than prior art solutions and simpler to retrofit to existing installations.

### Summary of the Invention

According to a first aspect of this invention, there is provided a compensation system according to claim 1.

According to a second aspect of this invention, there is provided a wind turbine according to claim 11.

According to a third aspect of this invention, there is provided a method according to claim 15.

A typical wind turbine installation, or the like, includes a rotor having a number of blades, each with an actuator for adjusting the angle of pitch about its longitudinal axis. The installation includes a rotor blade control system having a central controller for collectively controlling the pitch of each of the blades by outputting a collective rotor blade pitch angle signal to each actuator.

The compensation system of this invention is adapted to modify the rotor blade pitch angle signal received from the central controller and output a compensated rotor blade pitch angle signal to the actuator for each blade independently in order to counteract the loads on the blades caused by the non-uniformity of the wind-field, with the benefit of reducing the asymmetric rotor loads.

The first sensing means is adapted to measure the load on a respective rotor blade. Based upon the load on the blade due to non-uniformity in the wind-field, the compensation system is adapted to output the compensated rotor blade pitch signal such that the actuator connected thereto does not adjust the pitch of the blade according to the signal received from the central controller, as in the prior art systems, but instead adjusts the pitch of the blade according to the compensated signal received from the compensation system. In this way the pitch of the respective blade is adjusted in accordance with the pitch control demanded by the central controller but also to counteract the load on that blade due to the non-uniformity in the wind-field.

The compensation system of this invention is therefore a reactive system and can reduce the asymmetric rotor loads due to non-uniformity in the wind-field, which greatly increases the service life of the installation.

The individual compensation system for each rotor blade pitch angle does not depend on either the load measurements for any other blade or on the compensated rotor blade pitch angle for any other blade other than through the common collective rotor blade pitch angle signal provided by the central controller.

The blade loads may be measured by one or more strain gauges or optical-fibre sensors, or any equivalent. The blade control means may be implemented in hardware, software embedded in a digital platform dedicated to that task or software embedded in a digital platform shared with the actuator, sensing means or centralised controller or any equivalent. The actuator may be electromechanical or hydraulic, or any equivalent.

The blade control means, using the load measurements, determines the correct adjustment in pitch angle to counteract the loads caused by the non-uniformity of the wind-field. This adjustment is made continuously or at time intervals sufficiently short that the functionality of compensation system is not impaired.

No modification to the centralised controller of the rotor blade control system is necessary since the rotor blade pitch angle signal output thereby is still utilised by the compensation system, and the performance of the centralised controller is unaffected. In other words, the centralised controller does not need to be retuned when the compensation system is installed. The compensation system in accordance with this invention is therefore particularly advantageous in that it is simple to retrofit to existing installations. In some circumstances it is possible to install the compensation system connected between the centralised controller and a standard actuator. In other circumstances, the compensation system can be integrally supplied with an improved actuator and connected directly to the centralised controller. For interface reasons, the improved actuator would need to have the same bandwidth as the standard actuator it replaces.

So that the blade control means is not installation specific, in a preferred embodiment it is designed for a rotor with constant rotational speed and infinitely stiff support structure; that is, there is no fore-and-aft or lateral acceleration of the rotor hub to which the blade is attached. The design of the blade control means depends on a dynamic analysis of the compensation system in a reference frame with fixed origin and rotating with the rotor at constant rotational speed. It does not depend on the rest of the installation. The design is, thus, much simplified depending only on the attributes of the blade, actuator and sensing means. When, as is practically always the case, the rotational speed of the rotor is not constant and the support structure is not infinitely stiff, the reference frame has a non-fixed origin and rotates with the rotor at non-constant rotational speed; that is, the reference frame is non-inertial.

To compensate for the difference between the fixed-origin reference frame and the non-inertial reference frame the compensation system in accordance with the preferred embodiment includes second sensing means for measuring acceleration of the rotor blade. The blade control means, determines a modified load on the rotor blade, based upon the measured load and acceleration, using standard methods for the conversion between reference frames, such that the compensated rotor blade pitch angle signal is based upon the modified blade load. These modifications to the load have the form of fictitious forces; for example, the fictitious force corresponding to the blade out-of-plane bending moment is *- m_{b}lz̈_{R}* + *J*Ω̇*_{yR}* where *m_{b}* is the mass of the blade, *l* is the distance of the centre of mass of the blade from the axis of rotation of the rotor, *z̈*_{R} is the linear acceleration of the centre of rotation of the rotor perpendicular to the rotor, J is the inertia of the blade about the axis of rotation of the rotor and Ω̇*_{yR}* is the out-of-plane angular acceleration of the blade about its centre of rotation.

The loads on the blade caused by the non-uniformity of the wind field and, thus, the adjustment in the pitch angle of the blade are in part almost periodic, that is, strongly dependent on the rotor azimuth and almost repeating with every rotation of the blade. During an instant rotation, this almost periodic adjustment in the pitch angle is similar to the adjustments made during the preceding rotations. In a preferred embodiment, the blade control means determines the almost periodic part of the adjustment to the pitch angle from the adjustments during the preceding rotations to make better use of the actuator capabilities. The standard methods for the control of repetitive processes can be adapted to this context. The non-periodic part of the adjustment is still determined by the blade control means from the measurements of the blade loads and, preferably, accelerations.

In a preferred embodiment of the invention, the blade out-of-rotor-plane root bending moment and the fore-and-aft acceleration of the hub are measured. The compensation system preferably adjusts the blade pitch angle such that the blade root bending moment has a specified value derived from the pitch angle determined by the centralised controller. No adjustment is made to the pitch angle when the blade root bending moment is at its reference value. The same specified value for the blade root bending moment is used for all the blades in the rotor. All the blades, thus, have the same root bending moment and, other than in the plane of the rotor, the rotor loads balance.

As the blade sweeps through the wind-field, both the magnitude and angle of attack of the wind speed relative to the blade vary. The loads caused by the non-uniformity of the wind-field are more dependent on the changes in the angle of attack of the blade mean wind speed arising from the non-uniformity of the wind-field rather than on the changes in the magnitude. The adjustments to the blade pitch angle made by the compensation system much reduce these changes in the angle of attack. Consequently, all loads on the blade caused by the non-uniformity of the wind field can be reduced. Also reduced are the asymmetric loads on the rotor caused by blade misalignment, that is, the blades not being attached to the hub with exactly the intended pitch but with small errors.

### Brief Description of the Drawings

Preferred embodiments of the present invention will now be described in detail with reference to the accompanying drawings, in which:
Figure 1 shows a wind turbine;
Figure 2 shows a rotor blade including the compensation system in accordance with this invention and an actuator;
Figure 3 shows a first preferred embodiment of the compensation system;
Figure 4 shows a second preferred embodiment of the compensation system; and
Figure 5 shows a quasi-periodic element for the blade control means of the compensation system.

### Detailed Description

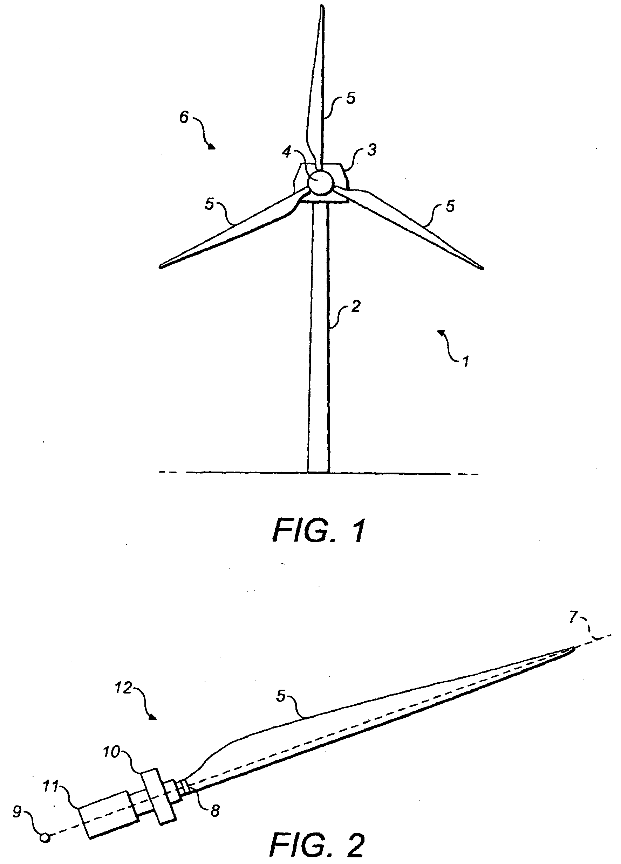

Figure 1 depicts a wind turbine 1. It consists of a tower 2, a nacelle 3 supported by the tower 2, and a rotor 6 with three blades 5 attached to a hub 4. Each blade 5 is attached radially to the hub 4 by a bearing 10 and is able to pitch about its longitudinal axis 7. The rotor 6 rotates in a near vertical plane. A generator (not shown) and transmission system (not shown) connecting it to the hub 4, are housed in the nacelle 3. A centralised controller 19 of a rotor blade control system is also housed in the nacelle 3.

Figure 2 depicts a blade 5, an actuator 11 and the compensation system 12 for the wind turbine 1. The blade 5 is supported by the bearing 10 and is pitched about its longitudinal axis 7 by the actuator 11. The compensation system 12 includes fibre-optic, or other suitable, sensors 8 for measuring blade root bending moments; sensors 9 for measuring acceleration of the centre of rotation of the rotor 6; and blade control means 13. The compensation system 12 is connected to the actuator 11 and the centralised controller 19.

The out-of-.rotor-plane root bending moment of the blade 5, µm, and the acceleration of the centre of rotor rotation perpendicular to the plane of rotation of the rotor, αₘ, are determined from the measurements made by the sensors 8 and 9 and communicated to the blade control means 13.

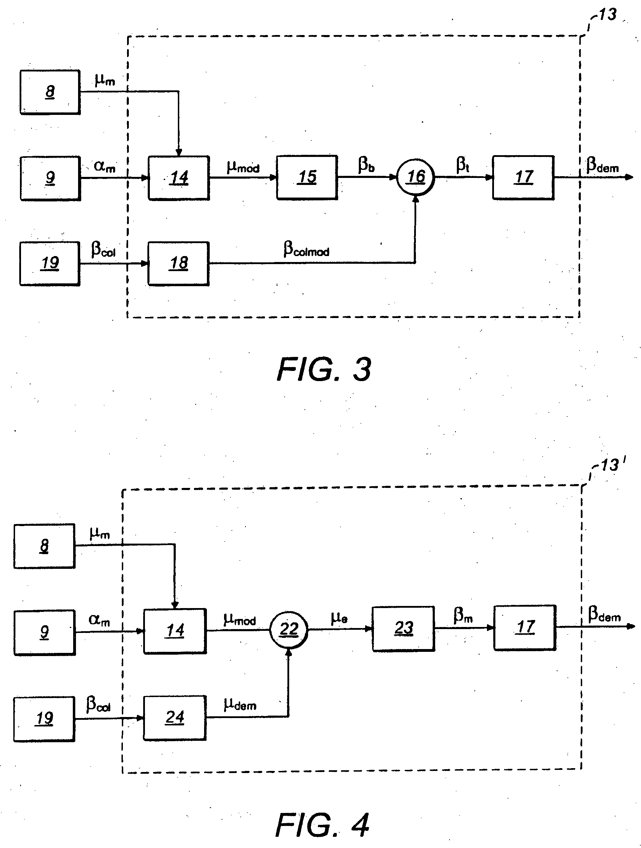

Figure 3 depicts a first preferred embodiment of the blade control means 13. It comprises a first blade control means element 14, a second blade control means element 15, a third blade control means element 17, a fourth blade control means element 18 and a summing element 16. In the first preferred embodiment the fluctuations in the root bending moment, caused by the non-uniformity of the wind field, are treated as disturbances to be counteracted by the blade control means 13. The fluctuations include a number of components and the blade control means 13 concentrates its effort on counteracting the most significant ones at low frequencies; for example, those centred on once or twice the rotational frequency of the rotor 6 with stochastically varying amplitude and phase.

The measured value of the blade out-of-rotor-plane root bending moment, µₘ, obtained by the fibre-optic sensors 8, and the measured value of the fore-and-aft acceleration of the hub, αₘ, obtained by sensor 9, are communicated to the first blade control means element 14. The first blade control means element 14 modifies µₘ to compensate for the fore-and-aft acceleration of the hub 4; that is, it compensates for the centre of rotation of the blades not being fixed and the rotational speed not being constant.

The corrected blade out-of-rotor-plane root bending moment, µ_{mod}, is communicated to the second blade control means element 15 which determines the adjustment in pitch angle, β_{b}, required to counteract the fluctuations in the root bending moment, caused by the non-uniformity of the wind field. The second blade control means element 15 includes filters (not shown) to select, for counteraction, the most significant components in the fluctuations in µ_{mod}. Those skilled in the art will appreciate that suitable filters are well known. The second blade control means element 15 also includes a band-pass filter (not shown) with low frequency wash-out to avoid overriding the collective adjustment, β_{col}, being made by the centralised controller 19 to the pitch angle of the blade 5, and with high frequency roll-off to mitigate against the effects of high frequency noise and parasitic dynamics.

The blade control means 13 ensures stability of the compensation system 12 through the design of the second blade control means element 15, that is, through the design of the filters (not shown). The dynamics, on which the design of the second blade control means element 15 depend, are the dynamics of the blade 5, the actuator 11 and the sensors 8 and 9. Because of the modification made to µₘ by the first control means element 14, the design of the second blade control means element 15 does not depend on any other aspects of the wind turbine dynamics.

A summing element 16 adds β_{b} and a modified collective adjustment, β_{colmod,} (described in detail below) to determine the total adjustment to the pitch angle, βₜ, which is communicated to the third blade control means element 17. The third blade control means element 17 compensates βₜ for the nonlinear aspect of the blade aerodynamics and provides smooth switch-in and switch-out of the compensation system. The compensated rotor blade pitch angle signal, β_{dem}, is communicated to the actuator 11.

The collective adjustment to the pitch angle, β_{col,} obtained from the centralised controller 19 is communicated to the fourth blade control means element 18. The compensation system 12 introduces additional dynamics between the centralised controller 19 and the actuator 11. The fourth blade control means element 18 modifies the low frequency dynamics between the centralised controller 19 and the pitch angle to be the same as the dynamics of a standard pitch actuator with some specified bandwidth. No modification to the centralised controller 19 is then necessary and its performance is unaffected. The collective pitch demand modified by the fourth blade control means element 18, β_{colmed}, is communicated to the summing element 16. Better use of the actuator capabilities can be made by including an element in the blade control means to cater for the almost periodic part of β_{dem.} This blade control means periodic element 25 (described in detail below) would be positioned between the second blade control means element 15 and the summing element 16, acting on β_{b}.

Figure 4 depicts a second preferred embodiment of the blade control means 13'. It consists of the first blade control means element 14, a fifth blade control means element 23, the third blade control means element 17, a sixth blade control means element 24 and a comparator element 22.

The actuator 11 is a pitch actuator; that is, it causes the actual pitch angle of the blade to follow a demanded pitch angle. In the second preferred embodiment, the actuator 11 is, in effect, converted to a moment actuator; that is, it causes the actual root bending moment of the blade 5 to follow a demanded root bending moment. The pitch angle of the blade 5 is adjusted to counteract, within the bandwidth of the moment actuator, the fluctuations in the root bending moment, caused by the non-uniformity of the wind-field.

The measured value of the blade out-of-rotor-plane root bending moment, µₘ, obtained by the fibre-optic sensors 8, and the measured values of the accelerations and the fore-and-aft acceleration of the hub 4, αₘ, obtained by sensor 9, are communicated to the first blade control means element 14. The first blade control means element 14 modifies µₘ to compensate for the fore-and-aft acceleration of the hub 4; that is, it compensates for the centre of rotation of the blade 5 not being fixed and the rotational speed not being constant. The corrected blade out-of-rotor-plane root bending moment, µ_{mod}, is communicated to the comparator element 22. The comparator element 22 subtracts µ_{mod} from the demanded root bending moment, µ_{dem}, to determine the root bending moment error, µₑ, which is communicated to the fifth blade control means element 23. The fifth blade control means element 23 is the moment actuator controller that acts to drive µₑ to zero. It does so by requiring the blade 5 be pitched to the appropriate angle, βₘ. The fifth blade control means element 23 consists of a PI controller (not shown) together with filters (not shown) with high frequency roll-off to mitigate against the effects of high frequency noise and parasitic dynamics.

The blade control means 13' ensures stability of the improved blade actuation system 12 through the design of the fifth blade control means element 23, that is, through the design of the PI controller and the filters. The design of the fifth blade control element 23 also determines the bandwidth of the moment actuator. The dynamics, on which the design of the fifth blade control means element 23 depend, are the dynamics of the blade 5, the actuator 11 and the sensors 8 and 9. Because of the modification made to µₘ by the first control means element 14, the design of the fifth blade control means element 23 does not depend on any other aspects of the wind turbine dynamics.

The required pitch angle, βₘ, is communicated to the third blade control means element 17. The third blade control means element 17 compensates βₘ for the nonlinear aspect of the blade aerodynamics and provides smooth switch-in and switch-out of the improved actuation system. The compensated adjustment to the pitch angle, β_{dem}, is communicated to the actuator 11.

The collective adjustment to the pitch angle, β_{col}, obtained from the centralised controller 19 is communicated to the sixth blade control means element 24. The sixth blade control means element 24 converts β_{col} to the equivalent blade root bending moment, µ_{dem}. The compensation system introduces additional dynamics between the centralised controller 19 and the actuator 11. The sixth blade control means element 24 also modifies the dynamics between the centralised controller 19 and the pitch angle to be the same as the dynamics of a standard pitch actuator with some specified bandwidth. No modification to the centralised controller 19 is then necessary and its performance is unaffected. The collective pitch demand modified by the sixth blade control means element 24, µₘ, is communicated to the comparator element 22. Better use of the actuator capabilities can be made by including an element in the blade control means 13' to cater for the almost periodic part of β_{dem}. This blade control means periodic element 25 (described in detail below) would be positioned between the fifth blade control means element 23 and the third blade control means element 17, acting on βₘ.

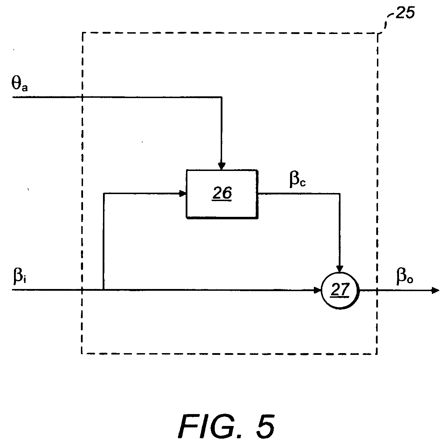

Figure 5 depicts a blade control means periodic element 25. It consists of a seventh blade control means element 26 and a summing element 27. A measurement of the azimuth angle, θₐ, and βᵢ are communicated to the seventh blade control means element 26. In the first preferred embodiment, βᵢ is β_{b}, and in the second preferred embodiment, βᵢ is βₘ. Using βᵢ from the preceding cycles, the seventh blade control means element 26 determines β_{c}, the almost periodic adjustment to the pitch angle of the blade. The summing element 27 adds βᵢ and β_{c} to obtain βₒ. In the first preferred embodiment βₒ is communicated to summing element 16, and in the second preferred embodiment βₒ is communicated to the third blade control means element 17.

While the forgoing description and drawings represent the preferred embodiments of the present invention, it will be apparent to those skilled in the art that various changes and modifications can be made therein without departing from the scope of the present invention which is defined by the appended claims. For example, it will be appreciated that the acceleration measurement may be derived from a differentiated velocity measurement.

## Claims

1. A compensation system (12) for independently modifying a rotor blade pitch angle signal (β_{col}) output by a centralised controller (19) of a rotor blade control system for a rotor having a plurality of rotor blades, the compensation system (12) comprising:
first sensing means (8) configured to measure a load (µₘ) on a single rotor blade (5); and
blade control means (13) configured to:
receive a rotor blade pitch angle signal (β_{col}), common to all rotor blades, from the centralised controller (19) of the rotor blade control system; and
output a compensated rotor blade pitch angle signal (β_{dem}), based upon the measured load (µₘ) on said single rotor blade (5) and the received rotor blade pitch angle signal (β_{col}), to counteract blade load, both cyclic and non-cyclic, due to non-uniformity in a wind-field, including turbulence, incident upon said single rotor blade (5),
wherein the blade control means (13) comprises a first control means element (14), the first control means element (14) determining the compensated rotor blade pitch angle signal (β_{col}) by determining a modified blade load (µ_{mod}) on the single rotor blade (5), the modifications to the measured load (µₘ) to determine the modified load (µ_{mod}) on the single rotor blade (5) having the form of fictitious forces, the modified load (µ_{mod}) compensating for the difference between a fixed origin reference frame of the rotor blade (5) rotating with the rotor (6) at constant rotational speed and a non-inertial reference frame of the single rotor blade (5).

2. A compensation system (12) according to claim 1, further comprising second sensing means (9) for measuring acceleration (αₘ) of said rotor blade, and wherein the blade control means (13) is further adapted to determine the modified load (µ_{mod}) on said rotor blade (5), based upon the measured load (µₘ) and acceleration, such that the compensated rotor blade pitch angle signal (β_{dem}) is based upon the modified blade load to compensate for the difference between the fixed origin reference frame and the non-inertial reference frame of said rotor blade.

3. A compensation system (12) according to claim 1 or 2, wherein the blade control means (13) is adapted to determine the compensated rotor blade pitch angle signal (β_{dem}) based upon adjustment in blade pitch angle (β_{b}) required to compensate for fluctuations, due to non-uniformity in the wind-field, in the modified blade load (µ_{mod}) and the rotor blade pitch angle signal (β_{col}) received from the centralised controller (19).

4. A compensation system (12) according to claim 1, 2 or 3, wherein the blade control means (13) is adapted to determine the compensated rotor blade pitch angle signal (β_{dem}) based upon blade load error (µₑ), that is the difference between blade load (µ_{dem}) demanded by the centralised controller (19) determined from the received rotor blade pitch angle signal (β_{col}) and the determined modified blade load (µ_{mod}).

5. A compensation system (12) according to any one of claims 1 to 4, wherein the compensated rotor blade pitch angle signal (β_{dem}) is based further upon compensation for non-linear aspects of said rotor blade (5) aerodynamics.

6. A compensation system (12) according to any one of claims 1 to 5, wherein the compensated rotor blade pitch angle signal (β_{dem}) is based further upon almost periodic pitch angle adjustments derived from one or more preceding rotations of said rotor blade (5).

7. A compensation system (12) according to any one of claims 1 to 6, wherein the load measured by the first sensing means (8) is the out-of-rotor-plane root bending moment (µₘ) of said rotor blade.

8. A compensation system (12) according to any one of claims 1 to 7, wherein the first sensing means is a fibre-optic sensor (8) or a strain gauge.

9. A compensation system (12) according to any one of claims 2 to 8, wherein the acceleration measured by the second sensing means (9) is an axial acceleration (αₘ) along an axis (7) of rotation perpendicular to a plane or rotation of said rotor blade (5).

10. A compensation system (12) according to any one of claims 2 to 9, wherein the second sensing means (9) is an accelerometer.

11. A wind turbine (1) comprising a plurality of compensation systems (12,12,...) in accordance with any one of claims 1 to 10 and a rotor (6) having a plurality of blades (5), each compensation system being:
associated with a respective blade (5) of the rotor;
adapted to receive the rotor blade pitch angle signal (β_{col}) intended for collective pitch control of the plurality of rotor blades, from the centralised controller (19); and
adapted to output a respective compensated rotor blade pitch angle signal (β_{dem}) for independent pitch control of its respective rotor blade (5).

12. A wind turbine (1) according to claim 11, when dependent upon any of claims 2 to 10, wherein the first sensing means (8) are positioned at the root of each rotor blade (5) and the second sensing means (9) are positioned at the centre of rotation of the rotor blades.

13. A wind turbine (1) according to claim 11 or 12, further comprising a rotor blade control system having a centralised controller (19) for outputting the rotor blade pitch angle signal (β_{col}).

14. A wind turbine (1) according to any one of claims 11 to 13, wherein each blade (5) is connected to a respective actuator (11) connected to the associated respective compensation system (12) for controlling the pitch of the blade based upon the compensated rotor blade pitch angle signal (β_{dem}).

15. A method for independently modifying a rotor blade pitch angle signal (β_{col}) output by a centralised controller (19) of a rotor blade control system for a rotor having a plurality of rotor blades, comprising the steps of:
measuring a load (µₘ) on a single rotor blade (5);
receiving a rotor blade pitch angle signal (β_{col}), common to all blades, from the centralised controller (19) of the rotor blade control system; and
outputting a compensated rotor blade pitch angle signal (β_{dem}), based upon the measured load on said single rotor blade (5) and the received rotor blade pitch angle signal (β_{col}), to counteract blade load, both cyclic and non-cyclic, due to non-uniformity in a wind-field, including turbulence, incident upon said rotor blade,
wherein the compensated rotor blade pitch angle signal (β) is determined by determining a modified load (µ_{mod}) on the single rotor blade (5), the modifications to the measured load (µₘ) having the form of fictitious forces, the modified load (µ_{mod}) compensating for the difference between a fixed origin reference frame of the single rotor blade (5) rotating with the rotor (6) at constant rotational speed and a non-inertial reference frame of the single rotor blade (5).

16. A method according to claim 15, further comprising the steps of:
measuring acceleration (αₘ) of said rotor blade; and
determining the modified load (µ_{mod}) on said rotor blade (5), based upon the measured load (µₘ) and acceleration, such that the compensated rotor blade pitch angle signal (β_{dem}) is based upon the modified blade load to compensate for the difference between fixed-origin and non-inertial reference frames of said rotor blade.

17. A method according to claim 15 or 16, further comprising the step of:
determining the compensated rotor blade pitch angle signal (β_{dem}) based upon adjustment in blade pitch angle (β_{b}) required to compensate for fluctuations, due to non-uniformity in the wind-field, in the modified blade load (µ_{mod}) and the rotor blade pitch angle signal (β_{col}) received from the centralised controller (19).

18. A method according to claim 15, 16 or 17, further comprising the step of:
determining the compensated rotor blade pitch angle signal (β_{dem}), based upon blade load error (µₑ) that is the difference between blade load (µ_{dem}).demanded by the centralised controller (19), determined from the received rotor blade pitch angle signal (β_{col}), and the determined modified blade load (µ_{mod}).

19. Blade control means (13) for use in the compensation system (12) of any one of claims 1 to 10, the blade control means (13) configured to:
receive a rotor blade pitch angle signal (β_{col}), common to all rotor blades (5), from the centralised controller (19) of the rotor blade control system; and
output a compensated rotor blade pitch angle signal (β_{dem}), based upon a measured load (µₘ) on said single rotor blade (5) and the received rotor blade pitch angle signal (β_{dem}), to counteract blade load, both cyclic and non-cyclic, due to non-uniformity in a wind-field, including turbulence, incident upon said rotor blade (5),
wherein the blade control means (13) comprises a first control means element (14), the first control means element (14) determining the compensated rotor blade pitch angle signal (β_{dem}) by determining a modified blade load (µ_{mod}) on the single rotor blade (5), the modifications to the measured load having the form of fictitious forces, the modified load (µ_{mod}) compensating for the difference between a fixed origin reference frame of the single rotor blade (5) rotating with the rotor (6) at constant rotational speed and a non-inertial reference frame of the single rotor blade (5).

## Patentansprüche

1. Ausgleichssystem (12) zum unabhängigen Modifizieren eines Rotorschaufel-Steigungswinkelsignals (β_{col}), das durch ein zentralisiertes Steuergerät (19) eines Rotorschaufel-Steuerungssystems für einen Rotor, der mehrere Schaufeln aufweist, ausgegeben wird, wobei das Ausgleichssystem (12) Folgendes umfasst:
erste Abfühlmittel (8), die dafür konfiguriert sind, eine Last (µₘ) an einer einzelnen Rotorschaufel (5) zu messen,
Schaufelsteuerungsmittel (13), die konfiguriert sind, um:
ein für alle Rotorschaufeln gemeinsames Rotorschaufel-Steigungswinkelsignal (β_{col}) von dem zentralisierten Steuergerät (19) des Rotorschaufel-Steuerungssystems zu empfangen und
ein ausgeglichenes Rotorschaufel-Steigungswinkelsignal (β_{dem}) auf der Grundlage der gemessenen Last (µₘ) an der einzelnen Rotorschaufel (5) und des empfangenen Rotorschaufel-Steigungswinkelsignals (β_{col}) auszugeben, um der Schaufellast, sowohl der zyklischen als auch der nichtzyklischen, auf Grund von Ungleichförmigkeit in einem Windfeld, einschließlich von Turbulenz, das auf die Rotorschaufel (5) auftrifft, entgegenzuwirken,
wobei die Schaufelsteuerungsmittel (13) ein erstes Steuerungsmittelelement (14) umfassen, wobei das erste Steuerungsmittelelement (14) das ausgeglichene Rotorschaufel-Steigungswinkelsignal (β_{dem}) durch das Bestimmen einer modifizierten Schaufellast (µ_{mod}) an der einzelnen Rotorschaufel (5) bestimmt, wobei die Modifikationen an der gemessenen Last (µₘ), um die modifizierten Last (µ_{mod}) an der einzelnen Rotorschaufel (5) zu bestimmen, die Form von Scheinkräften aufweisen, wobei die modifizierte Last (µ_{mod}) die Differenz zwischen einem Bezugssystem mit festem Ursprung der einzelnen Rotorschaufel (5), die sich mit dem Rotor (6) mit einer konstanten Drehgeschwindigkeit dreht, und einem Nichtinertial-Bezugssystem der einzelnen Rotorschaufel (5) ausgleicht.

2. Ausgleichssystem (12) nach Anspruch 1, das ferner zweite Abfühlmittel (9) zum Messen einer Beschleunigung (αₘ) der Rotorschaufel umfasst und wobei die Schaufelsteuerungsmittel (13) ferner dafür eingerichtet sind, die modifizierte Last (µ_{mod}) an der Rotorschaufel (5) derart auf der Grundlage der gemessenen Last (µₘ) und der Beschleunigung zu bestimmen, dass das ausgeglichene Rotorschaufel-Steigungswinkelsignal (β_{dem}) auf der modifizierten Schaufellast beruht, um die Differenz zwischen dem Bezugssystem mit festem Ursprung und dem Nichtinertial-Bezugssystem der Rotorschaufel auszugleichen.

3. Ausgleichssystem (12) nach Anspruch 1 oder 2, wobei die Schaufelsteuerungsmittel (13) dafür eingerichtet sind, das ausgeglichene Rotorschaufel-Steigungswinkelsignal (β_{dem}) auf der Grundlange einer Einstellung bei dem Schaufelsteigungswinkel (β_{b}) zu bestimmen, die erforderlich ist, um Fluktuationen auf Grund von Ungleichförmigkeit in dem Windfeld, bei der modifizierten Schaufellast (µ_{mod}) (19) und dem von dem zentralisierten Steuergerät empfangenen Rotorschaufel-Steigungswinkelsignal (β_{col}) auszugleichen.

4. Ausgleichssystem (12) nach Anspruch 1, 2 oder 3, wobei die Schaufelsteuerungsmittel (13) dafür eingerichtet sind, das ausgeglichene Rotorschaufel-Steigungswinkelsignal (β_{dem}) auf der Grundlage eines Schaufellastfehlers (µₑ) zu bestimmen, der die Differenz zwischen der durch das zentralisierte Steuergerät (19) angeforderten Schaufellast (µ_{dem}), die aus dem empfangenen Rotorschaufel-Steigungswinkelsignal (β_{col}) bestimmt ist, und der bestimmten modifizierten Schaufellast (µ_{mod}) ist.

5. Ausgleichssystem (12) nach einem der Ansprüche 1 bis 4, wobei das ausgeglichene Rotorschaufel-Steigungswinkelsignal (β_{dem}) ferner auf einem Ausgleich nichtlinearer Aspekte der Aerodynamik der Rotorschaufel (5) beruht.

6. Ausgleichssystem (12) nach einem der Ansprüche 1 bis 5, wobei das ausgeglichene Rotorschaufel-Steigungswinkelsignal (β_{dem}) ferner auf nahezu periodischen Steigungswinkeleinstellungen beruht, die aus einer oder mehreren vorhergehenden Umdrehungen der Rotorschaufel (5) abgeleitet sind.

7. Ausgleichssystem (12) nach einem der Ansprüche 1 bis 6, wobei die durch die ersten Abfühlmittel (8) gemessene Last das Biegemoment (µₘ) der Rotorschaufel außerhalb der Rotorebene ist.

8. Ausgleichssystem (12) nach einem der Ansprüche 1 bis 7, wobei die ersten Abfühlmittel ein faseroptischer Sensor (8) oder ein Dehnungsmessgerät sind.

9. Ausgleichssystem (12) nach einem der Ansprüche 2 bis 8, wobei die durch die zweiten Abfühlmittel (9) gemessene Beschleunigung eine axiale Beschleunigung (αₘ) entlang einer Drehachse (7), senkrecht zu einer Drehebene der Rotorschaufel (5), ist.

10. Ausgleichssystem (12) nach einem der Ansprüche 2 bis 9, wobei die zweiten Abfühlmittel (9) ein Beschleunigungsmessgerät sind.

11. Windturbine (1) die mehrere Ausgleichssysteme (12, 12,...) nach einem der Ansprüche 1 bis 10 und einen Rotor (6), der mehrere Schaufeln (5) aufweist, umfasst, wobei jedes Ausgleichssystem Folgendes ist:
verknüpft mit einer jeweiligen Schaufel (5) des Rotors,
dafür eingerichtet, das Rotorschaufel-Steigungswinkelsignal (β_{col}), das für eine gemeinsame Steigungssteuerung der mehreren Rotorschaufeln vorgesehen ist, von dem zentralisierten Steuergerät (19) zu empfangen, und
dafür eingerichtet, ein jeweiliges ausgeglichenes Rotorschaufel-Steigungswinkelsignal (β_{dem}) für eine unabhängige Steigungssteuerung seiner jeweiligen Rotorschaufel (5) auszugeben.

12. Windturbine (1) nach Anspruch 11, wenn abhängig von einem der Ansprüche 2 bis 10, wobei die ersten Abfühlmittel (8) an der Wurzel jeder Rotorschaufel (5) angeordnet sind und die zweiten Abfühlmittel (9) an dem Drehungsmittelpunkt der Rotorschaufeln angeordnet sind.

13. Windturbine (1) nach einem der Ansprüche 11 bis 12, die ferner ein Rotorschaufel-Steuerungssystem umfasst, das ein zentralisiertes Steuergerät (19) zum Ausgeben des Rotorschaufel-Steigungswinkelsignals (β_{col}) aufweist.

14. Windturbine (1) nach einem der Ansprüche 11 bis 13, wobei jede Schaufel (5) mit einem jeweiligen Stellantrieb (11) verbunden ist, der mit dem zugeordneten jeweiligen Ausgleichssystem (12) verbunden ist, um die Steigung der Schaufel auf der Grundlage des ausgeglichenen Rotorschaufel-Steigungswinkelsignals (β_{dem}) zu steuern.

15. Verfahren zum unabhängigen Modifizieren eines Rotorschaufel-Steigungswinkelsignals (β_{col}), das durch ein zentralisiertes Steuergerät (19) eines Rotorschaufel-Steuerungssystems für einen Rotor, der mehrere Schaufeln aufweist, ausgegeben wird, wobei das Verfahren die folgenden Schritte umfasst:
das Messen einer Last (µₘ) an einer einzelnen Rotorschaufel (5),
das Empfangen eines für alle Rotorschaufeln gemeinsamen Rotorschaufel-Steigungswinkelsignals (β_{col}) von dem zentralisierten Steuergerät (19) des Rotorschaufel-Steuerungssystems und
das Ausgeben eines ausgeglichenen Rotorschaufel-Steigungswinkelsignals (β_{dem}) auf der Grundlage der gemessenen Last (µₘ) an der einzelnen Rotorschaufel (5) und des empfangenen Rotorschaufel-Steigungswinkelsignals (β_{col}), um der Schaufellast, sowohl der zyklischen als auch der nichtzyklischen, auf Grund von Ungleichförmigkeit in einem Windfeld, einschließlich von Turbulenz, das auf die Rotorschaufel auftrifft, entgegenzuwirken,
wobei das ausgeglichene Rotorschaufel-Steigungswinkelsignal (β) durch das Bestimmen einer modifizierten Schaufellast (µ_{mod}) an der einzelnen Rotorschaufel (5) bestimmt wird, wobei die Modifikationen an der gemessenen Last (µₘ) die Form von Scheinkräften aufweisen, wobei die modifizierte Last (µ_{mod}) die Differenz zwischen einem Bezugssystem mit festem Ursprung der einzelnen Rotorschaufel (5), die sich mit dem Rotor (6) mit einer konstanten Drehgeschwindigkeit dreht, und einem Nichtinertial-Bezugssystem der einzelnen Rotorschaufel (5) ausgleicht.

16. Verfahren nach Anspruch 15, das ferner die folgenden Schritte umfasst:
das Messen einer Beschleunigung (αₘ) der Rotorschaufel und
das Bestimmen der modifizierten Last (µ_{mod}) an der Rotorschaufel (5) derart auf der Grundlage der gemessenen Last (µₘ) und der Beschleunigung, dass das ausgeglichene Rotorschaufel-Steigungswinkelsignal (β_{dem}) auf der modifizierten Schaufellast beruht, um die Differenz zwischen dem Bezugssystem mit festem Ursprung und dem Nichtinertial-Bezugssystem der Rotorschaufel auszugleichen.

17. Verfahren nach Anspruch 15 oder 16, das ferner die folgenden Schritte umfasst:
das Bestimmen des ausgeglichenen Rotorschaufel-Steigungswinkelsignals (β_{dem}) auf der Grundlange einer Einstellung bei dem Schaufelsteigungswinkel (β_{b}), die erforderlich ist, um Fluktuationen auf Grund von Ungleichförmigkeit in dem Windfeld, bei der modifizierten Schaufellast (µ_{mod}) und dem von dem zentralisierten Steuergerät (19) empfangenen Rotorschaufel-Steigungswinkelsignal (β_{col}) auszugleichen.

18. Verfahren nach Anspruch 15, 16 oder 17, das ferner die folgenden Schritte umfasst:
das Bestimmen des ausgeglichenen Rotorschaufel-Steigungswinkelsignals (β_{dem}) auf der Grundlage eines Schaufellastfehlers (µₑ), der die Differenz zwischen der durch das zentralisierte Steuergerät (19) angeforderten Schaufellast (µ_{dem}), die aus dem empfangenen Rotorschaufel-Steigungswinkelsignal (β_{col}) bestimmt ist, und der bestimmten modifizierten Schaufellast (µ_{mod}) ist.

19. Schaufelsteuerungsmittel (13) zur Verwendung in dem Ausgleichssystem (12) nach einem der Ansprüche 1 bis 10, wobei die Schaufelsteuerungsmittel (13) konfiguriert sind, um:
ein für alle Rotorschaufeln gemeinsames Rotorschaufel-Steigungswinkelsignal (β_{col}) von dem zentralisierten Steuergerät (19) des Rotorschaufel-Steuerungssystems zu empfangen und
ein ausgeglichenes Rotorschaufel-Steigungswinkelsignal (β_{dem}) auf der Grundlage der gemessenen Last (µₘ) an der einzelnen Rotorschaufel (5) und des empfangenen Rotorschaufel-Steigungswinkelsignals (β_{col}) auszugeben, um der Schaufellast, sowohl der zyklischen als auch der nichtzyklischen, auf Grund von Ungleichförmigkeit in einem Windfeld, einschließlich von Turbulenz, das auf die Rotorschaufel (5) auftrifft, entgegenzuwirken,
wobei die Schaufelsteuerungsmittel (13) ein erstes Steuerungsmittelelement (14) umfassen, wobei das erste Steuerungsmittelelement (14) das ausgeglichene Rotorschaufel-Steigungswinkelsignal (β_{dem}) durch das Bestimmen einer modifizierten Schaufellast (µ_{mod}) an der einzelnen Rotorschaufel (5) bestimmt, wobei die Modifikationen an der gemessenen Last die Form von Scheinkräften aufweisen, wobei die modifizierte Last (µ_{mod}) die Differenz zwischen einem Bezugssystem mit festem Ursprung der einzelnen Rotorschaufel (5), die sich mit dem Rotor (6) mit einer konstanten Drehgeschwindigkeit dreht, und einem Nichtinertial-Bezugssystem der einzelnen Rotorschaufel (5) ausgleicht.

## Revendications

1. Système de compensation (12) destiné à modifier de manière indépendante un signal d'angle de pas de pale de rotor (β_{col}) délivré par un contrôleur centralisé (19) d'un système de commande de pale de rotor pour un rotor qui possède une pluralité de pales de rotor, le système de compensation (12) comprenant :
un premier moyen de détection (8) configuré pour mesurer une charge (µₘ) sur une seule pale de rotor (5) ; et
un moyen de commande de pale (13) configuré pour :
recevoir un signal d'angle de pas de pale de rotor (β_{col}), commun à toutes les pales de rotor, de la part du contrôleur centralisé (19) du système de commande de pale de rotor ; et
délivrer un signal d'angle de pas de pale de rotor compensé (β_{dem}), sur la base de la charge mesurée (µₘ) sur ladite pale de rotor (5) et du signal d'angle de pas de pale de rotor reçu (β_{col}), afin de contrer la charge de la pale, cyclique et non-cyclique, due à la non-uniformité dans un champ de vent, qui comprend une turbulence, incidente sur ladite pale de rotor (5),
dans lequel le moyen de commande de pale (13) comprend un premier élément de moyen de commande (14), le premier élément de moyen de commande (14) déterminant le signal d'angle de pas de pale de rotor compensé (β_{col}) en déterminant une charge de pale modifiée (µ_{mod}) sur la pale de rotor (5), les modifications de la charge mesurée (µₘ) afin de déterminer la charge modifiée (µ_{mod}) sur la pale de rotor (5) ayant la forme de forces fictives, la charge modifiée (µ_{mod}) compensant la différence entre un cadre de référence d'origine fixe de la pale de rotor (5) qui tourne avec le rotor (6) à une vitesse de rotation constante et un cadre de référence non-inertiel de la pale de rotor (5).

2. Système de compensation (12) selon la revendication 1, qui comprend en outre un second moyen de détection (9) destiné à mesurer l'accélération (αₘ) de ladite pale de rotor, et dans lequel le moyen de commande de pale (13) est en outre adapté pour déterminer la charge modifiée (µ_{mod}) sur ladite pale de rotor (5), sur la base de la charge mesurée (µₘ) et de l'accélération, de sorte que le signal d'angle de pas de pale de rotor compensé (β_{dem}) repose sur la charge de pale modifiée afin de compenser la différence entre le cadre de référence d'origine fixe et le cadre de référence non-inertiel de ladite pale de rotor.

3. Système de compensation (12) selon la revendication 1 ou 2, dans lequel le moyen de commande de pale (13) est adapté pour déterminer le signal d'angle de pas de pale de rotor compensé (β_{dem}) sur la base d'un ajustement de l'angle de pas de la pale (β_{b}) nécessaire pour compenser les fluctuations, en raison de la non-uniformité du champ de vent, de la charge de pale modifiée (µ_{mod}) et du signal d'angle de pas de pale de rotor (β_{col}) reçu de la part du contrôleur centralisé (19).

4. Système de compensation (12) selon la revendication 1, 2 ou 3, dans lequel le moyen de commande de pale (13) est adapté pour déterminer le signal d'angle de pas de pale de rotor compensé (β_{dem}) sur la base d'une erreur de charge de pale (µₑ), c'est-à-dire de la différence entre la charge de pale (µ_{dem}) demandée par le contrôleur centralisé (19) déterminée à partir du signal d'angle de pas de pale de rotor reçu (β_{col}) et la charge de pale modifiée déterminée (µ_{mod}).

5. Système de compensation (12) selon l'une quelconque des revendications 1 à 4, dans lequel le signal d'angle de pas de pale de rotor compensé (β_{dem}) repose en outre sur le compensation des aspects non-linéaires de l'aérodynamique de ladite pale de rotor (5).

6. Système de compensation (12) selon l'une quelconque des revendications 1 à 5, dans lequel le signal d'angle de pas de pale de rotor compensé (β_{dem}) repose en outre sur des ajustements d'angle de pas quasiment périodiques dérivés d'une ou plusieurs rotation(s) précédente(s) de ladite pale de rotor (5).

7. Système de compensation (12) selon l'une quelconque des revendications 1 à 6, dans lequel la charge mesurée par le premier moyen de détection (8) correspond au moment de flexion de base en-dehors du plan du rotor (µₘ) de ladite pale de rotor.

8. Système de compensation (12) selon l'une quelconque des revendications 1 à 7, dans lequel le premier moyen de détection est un capteur à fibre optique (8) ou une jauge de déformation.

9. Système de compensation (12) selon l'une quelconque des revendications 2 à 8, dans lequel l'accélération mesurée par le second moyen de détection (9) est une accélération axiale (αₘ) le long d'un axe (7) de rotation perpendiculaire à un plan de rotation de ladite pale de rotor (5).

10. Système de compensation (12) selon l'une quelconque des revendications 2 à 9, dans lequel le second moyen de détection (9) est un accéléromètre.

11. Éolienne (1) qui comprend une pluralité de systèmes de compensation (12, 12, ...) selon l'une quelconque des revendications 1 à 10 et un rotor (6) qui possède une pluralité de pales (5), chaque système de compensation étant :
associé à une pale respective (5) du rotor ;
adapté pour recevoir le signal d'angle de pas de pale de rotor (β_{col}) destiné à la commande de pas collective de la pluralité de pales de rotor, de la part du contrôleur centralisé (19) ; et
adapté pour délivrer un signal d'angle de pas de pale de rotor compensé respectif (β_{dem}) pour la commande de pas indépendante de sa pale de rotor respective (5).

12. Éolienne (1) selon la revendication 11, lorsqu'elle dépend de l'une quelconque des revendications 2 à 10, dans laquelle le premier moyen de détection (8) est positionné à la base de chaque pale de rotor (5) et le second moyen de détection (9) est positionné au niveau du centre de rotation des pales de rotor.

13. Éolienne (1) selon la revendication 11 ou 12, qui comprend en outre un système de commande de pale de rotor qui possède un contrôleur centralisé (19) destiné à délivrer le signal d'angle de pas de pale de rotor (β_{col}).

14. Éolienne (1) selon l'une quelconque des revendications 11 à 13, dans laquelle chaque pale (5) est reliée à un actionneur respectif (11) relié au système de compensation respectif associé (12) destiné à contrôler le pas de la pale sur la base du signal d'angle de pas de pale de rotor compensé (β_{dem}).

15. Procédé de modification indépendante d'un signal d'angle de pas de pale de rotor (β_{col}) délivré par un contrôleur centralisé (19) d'un système de commande de pale de rotor qui possède une pluralité de pales de rotor, qui comprend les étapes qui consistent à :
mesurer une charge (µₘ) sur une seule pale de rotor (5) ;
recevoir un signal d'angle de pas de pale de rotor (β_{col}), commun à toutes les pales, de la part du contrôleur centralisé (19) du système de commande de pale de rotor ; et
délivrer un signal d'angle de pas de pale de rotor compensé (β_{dem}), sur la base de la charge mesurée sur la pale de rotor (5) et du signal d'angle de pas de pale de rotor reçu (β_{col}), afin de contrer la charge de pale, cyclique et non-cyclique, due à la non-uniformité dans un champ de vent, qui comprend une turbulence, incidente sur ladite pale de rotor,
dans lequel le signal d'angle de pas de pale de rotor compensé (β) est déterminé en déterminant une charge modifiée (µ_{mod}) sur la pale de rotor (5), les modifications de la charge mesurée (µₘ) ayant la forme de forces fictives, la charge modifiée (µ_{mod}) compensant la différence entre un cadre de référence d'origine fixe de la pale de rotor (5) qui tourne avec le rotor (6) à une vitesse de rotation constante et un cadre de référence non-inertiel de la pale de rotor (5).

16. Procédé selon la revendication 15, qui comprend en outre les étapes qui consistent à :
mesurer l'accélération (αₘ) de ladite pale de rotor ; et
déterminer la charge modifiée (µ_{mod}) sur ladite pale de rotor (5), sur la base de la charge mesurée (µₘ) et de l'accélération, de sorte que le signal d'angle de pas de pale de rotor compensé (β_{dem}) repose sur la charge de pale modifiée afin de compenser la différence entre les cadres de référence d'origine fixe et non-inertiel de ladite pale de rotor.

17. Procédé selon la revendication 15 ou 16, qui comprend en outre l'étape qui consiste à :
déterminer le signal d'angle de pas de pale de rotor compensé (β_{dem}) sur la base d'un ajustement de l'angle de pas de pale (β_{b}) nécessaire pour compenser les fluctuations, dues à la non-uniformité du champ de vent, de la charge de pale modifiée (µ_{mod}) et du signal d'angle de pas de pale de rotor (β_{col}) reçu de la part du contrôleur centralisé (19).

18. Procédé selon la revendication 15, 16 ou 17, qui comprend en outre l'étape qui consiste à :
déterminer le signal d'angle de pas de pale de rotor compensé (β_{dem}), sur la base d'une erreur de charge de pale (µₑ), c'est-à-dire de la différence entre la charge de pale (µ_{dem}) demandée par le contrôleur centralisé (19) déterminée à partir du signal d'angle de pas de pale de rotor reçu (β_{col}) et la charge de pale modifiée déterminée (µ_{mod}).

19. Moyen de commande de pale (13) destiné à être utilisé dans le système de compensation (12) selon l'une quelconque des revendications 1 à 10, le moyen de commande de pale (13) étant configuré pour :
recevoir un signal d'angle de pas de pale de rotor (β_{col}), commun à toutes les pales de rotor, de la part du contrôleur centralisé (19) du système de commande de pale de rotor ; et
délivrer un signal d'angle de pas de pale de rotor compensé (β_{dem}), sur la base de la charge mesurée (µₘ) sur ladite pale de rotor (5) et du signal d'angle de pas de pale de rotor reçu (β_{col}), afin de contrer la charge de la pale, cyclique et non-cyclique, due à la non-uniformité dans un champ de vent, qui comprend une turbulence, incidente sur ladite pale de rotor (5),
dans lequel le moyen de commande de pale (13) comprend un premier élément de moyen de commande (14), le premier élément de moyen de commande (14) déterminant le signal d'angle de pas de pale de rotor compensé (β_{dem}) en déterminant une charge de pale modifiée (µ_{mod}) sur la pale de rotor (5), les modifications de la charge mesurée ayant la forme de forces fictives, la charge modifiée (µ_{mod}) compensant la différence entre un cadre de référence d'origine fixe de la pale de rotor (5) qui tourne avec le rotor (6) à une vitesse de rotation constante et un cadre de référence non-inertiel de la pale de rotor (5).
